# EUROPÄISCHE PATENTSCHRIFT

(11) **EP 1 553 309 B1**
(45) Veröffentlichungstag und Bekanntmachung des Hinweises auf die Patenterteilung: **09.12.2009**
(21) Anmeldenummer: 05000027.2
(22) Anmeldetag: 03.01.2005
(51) Int. Cl.: F16B 2/12

(54) **Vorrichtung zur Befestigung eines Bauteils an Mantelrohre unterschiedlichen Durchmessers**
Device for fixing a component on jacket tubes with different diameters
Dispositif pour la fixation de composants sur des tubes enveloppes de diamètres différents

(30) Priorität: 07.01.2004 DE 202004000110 U
(43) Veröffentlichungstag der Anmeldung: 13.07.2005
(73) Patentinhaber: TRW Automotive Electronics & Components GmbH & Co. KG, 78315 Radolfzell (DE)
(72) Erfinder: Altmann, Markus, 78345 Moos (DE); Mauch, Markus, 73773 Aichwald (DE)
(74) Vertreter: Prinz & Partner

(56) Entgegenhaltungen:
- WO-A-03/048588
- US-B1- 6 236 004
- US-B1- 6 520 464

## Beschreibung

Die Erfindung betrifft eine Vorrichtung zur Befestigung eines Bauteils an einem Mantelrohr, wie aus US 6 520 464 bekannt, gemäß dem Oberbegriff des Anspruchs 1. Insbesondere ist die Erfindung auf eine Befestigungsvorrichtung für ein Lenkstockschalter- oder Mantelrohrschaltermodul gerichtet.

Die Lenkvorrichtung eines Kraftfahrzeugs umfaßt üblicherweise eine in einem Mantelrohr gelagerte Lenkspindel, die mit dem Lenkrad verbunden ist. Am Mantelrohr sind verschiedene Bauteile befestigt, die der Steuerung und Betätigung von Fahrzeugfunktionen dienen. Die Lenkstockschalter- oder Mantelrohrschaltermodule umfassen in der Regel jeweils einen Blinkerschalter und einen Wischerschalter für die stufenweise Betätigung der Scheibenwischer und für die Schaltfunktionen der Scheibenwaschanlage. Darüber hinaus können in den Mantelrohrschaltermodulen verschiedene Schnittstellen und Auswerteeinheiten beispielsweise zu Lenkkraftunterstützungs-systemen, Fahrtwinkel- und Lenkwinkelsensoren angeordnet sein.

Die üblichen Befestigungsvorrichtungen für die Lenkstockschalter- bzw. Mantelrohrschaltermodule sind fahrzeugspezifisch ausgelegt und können daher nur für einen Mantelrohrdurchmesser verwendet werden. Dies bedingt eine umfangreiche Vorratshaltung bei Fahrzeugherstellern und Werkstätten sowie hohe Lagerkosten.

Aufgabe der Erfindung ist es daher, diese Nachteile zu vermeiden und eine für verschiedene Fahrzeugtypen verwendbare Befestigungsvorrichtung der eingangs genannten Art zu schaffen.

Diese Aufgabe wird durch die Merkmale des Anspruch 1 gelöst.

Durch die Erfindung wird also eine Befestigungsvorrichtung beispielsweise für ein Mantelrohrschaltermodul bereitgestellt, das für wenigstens zwei verschiedene Mantelrohre mit unterschiedlichem Außendurchmesser verwendet werden kann. Dies wird durch die in der Aufnahmehülse beweglichen Ausgleichsbacken ermöglicht, die den ursprünglichen großen Aufnahmequerschnitt oder linken Durchmesser der Befestigungshülse auf einen kleineren Aufnahmequerschnitt reduzieren, wenn sie in dem Aufnahmeabschnitt der Befestigungshülse liegen. Beim Verschieben der Ausgleichsbacken verschwinden diese in den dafür vorgesehenen Ausbuchtungen an der Befestigungshülse, so daß der Aufnahmequerschnitt auf das ursprüngliche Maß vergrößert wird und die Befestigungshülse auf ein Mantelrohr mit einem größeren Außendurchmesser paßt. Die erfindungsgemäße Befestigungshülse ist somit in vorteilhafter Weise zur Befestigung an verschiedenen Mantelrohren geeignet. Da die Differenz der Aufnahmequerschnitte bzw. der Mantelrohrdurchmesser durch die Dicke der Ausgleichsbacken bestimmt wird, können die passenden Mantelrohre auf einfache Weise ausgewählt werden. Die Ausgleichsteile der erfindungsgemäßen Befestigungsvorrichtung sind zudem in einfacher Weise durch Kunststoffspritzguß herstellbar. Somit kann auch auf die Bevorratung von verschiedenen Befestigungsvorrichtungen mit unterschiedlichem Klemmdurchmesser verzichtet werden. Die Lagerhaltung kann vielmehr auf die verschiedenen Ausgleichsteile reduziert werden. Hierdurch sind ebenfalls erhebliche Kosteneinsparungen realisierbar.

Die Ausgleichsbacken der erfindungsgemäßen Befestigungsvorrichtung sind vorzugsweise durch Stege miteinander verbunden. Die Stege können beispielsweise aus Federstahl gebildet sein. Besonders bevorzugt ist jedoch, wenn die Stege und die Ausgleichsbacken einstückig miteinander aus Kunststoff gebildet sind. Die Stege stabilisieren das Ausgleichsteil und erhöhen die mechanische Festigkeit. Bei Verwendung von Kunststoff als Material für die Stege ist eine besonders einfache und kostengünstige Fertigung möglich.

Zweckmäßig ist, wenn das Ausgleichsteil angeformte Laschen aufweist, die ein Verschieben oder Verdrehen der Ausgleichsbacken erleichtern. Die an das Ausgleichsteil bevorzugt im Bereich der Ausgleichsbacken angeformten Laschen können außerdem als Angriffspunkte für ein Werkzeug dienen und somit die Montage und/oder Betätigung des Ausgleichsteils erleichtern.

Besonders bevorzugt ist der Aufnahmeabschnitt der Befestigungshülse für das Mantelrohr im Querschnitt kreissegmentförmig ausgebildet. Die Form des Aufnahmeabschnitts der Befestigungshülse korrespondiert dann mit der Form des Mantelrohrs, so daß der im Querschnitt kreissegmentförmige Aufnahmeabschnitt fest am Außenumfang des Mantelrohrs anliegt und dieses im ersten Aufnahmequerschnitt klemmt, wenn sich die Ausgleichsbacken in der ersten Position befinden, in der sie in den radial vorstehenden Ausbuchtungen an der Befestigungshülse aufgenommen sind.

Auch die Ausgleichsbacken sind bevorzugt drehbeweglich um eine Mittelachse der Befestigungshülse angeordnet, wobei die Form der Ausgleichbacken bevorzugt mit der Form der Ausbuchtung korrespondiert. Hierdurch wird eine einfache Betätigung des Ausgleichsteils bei gleichzeitig hoher mechanischer Stabilität ermöglicht. Die Anpassung der Form der Ausbuchtungen an die Form der Ausgleichsbacken reduziert den Platzbedarf für die erfindungsgemäße Befestigungsvorrichtung.

Gemäß einer besonders bevorzugten Ausführungsform weisen die Ausbuchtungen schräge Seitenwände und die Ausgleichsbacken abgeschrägte Seitenflächen sowie eine konkave, dem Mantelrohr zugewandte Klemmfläche auf. Sie lassen sich dadurch leicht aus den Ausbuchtungen herausdrehen und in die zweite Position überführen. In dieser Position kann ein Mantelrohr mit einem kleineren Außendurchmesser eingesetzt werden und wird sicher zwischen den konkaven Klemmflächen der Ausgleichsbacken gehalten.

Das Ausgleichsteil mit den daran angeordneten Ausgleichsbacken ist bevorzugt ein von der Befestigungshülse getrenntes Bauteil. Damit es sicher in der Hülse gehalten wird, steht es bevorzugt unter einer Vorspannung der Art, daß die Ausgleichsbacken auch in der ersten Position mit Federkraft beaufschlagt und so in den Ausbuchtungen gehalten sind. Die Federkraft kann beispielsweise dadurch erzeugt werden, daß das Ausgleichsteil mit den Stegen und den Ausgleichsbacken in Form eines Spaltrings gebildet ist, dessen Innendurchmesser geringfügig größer als der des ersten Aufnahmequerschnitts ist. Beim Einsetzen der Ausgleichsbacken in die Ausbuchtungen der Befestigungshülse wird dann der Spaltring leicht zusammengedrückt und erhält so die gewünschte Vorspannung.

Vorteilhaft ist ferner, wenn das Ausgleichteil an der Befestigungshülse nur zwei definierte Positionen einnehmen kann. Diese Positionen können beispielsweise durch Endanschläge und/oder eine entsprechende Form des Ausgleichsteils verwirklicht werden. Beispielsweise kann an der Befestigungshülse eine Schulter vorgesehen sein, an die ein am Ausgleichsteil angeformter Vorsprung anschlägt. Ferner ist möglich, zwischen der Befestigungshülse und dem Ausgleichsteil eine Rastverbindung vorzusehen, die das Ausgleichsteil in der ersten oder zweiten Position fixiert.

Weitere Merkmale und Vorteile der vorliegenden Erfindung ergeben sich aus der nachfolgenden Beschreibung einer bevorzugten Ausführungsform in Verbindung mit der Zeichnung. In der Zeichnung zeigen:
- Figur 1 eine perspektivische Ansicht der erfindungsgemäßen Befestigungsvorrichtung auf einem Mantelrohr mit großem Querschnitt;
- Figur 2 eine Draufsicht auf eine Stirnseite der Befestigungsvorrichtung von Figur 1;
- Figur 3 eine Schnittzeichnung der Befestigungsvorrichtung von Figur 1, gesehen von dem bauteilseitigen Ende der Befestigungsvorrichtung;
- Figur 4 eine perspektivische Darstellung der erfindungsgemäßen Befestigungsvorrichtung auf einem Mantelrohr mit kleinerem Durchmesser;
- Figur 5 eine Draufsicht auf eine Stirnseite der Befestigungsvorrichtung von Figur 4; und
- Figur 6 eine Schnittansicht der Befestigungsvorrichtung von Figur 4, gesehen von dem bauteilseitigen Ende der Befestigungsvorrichtung.

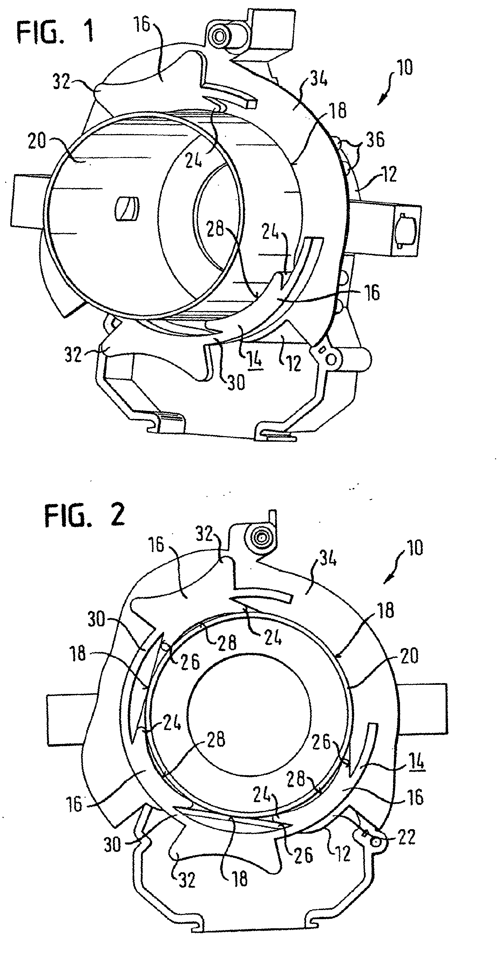

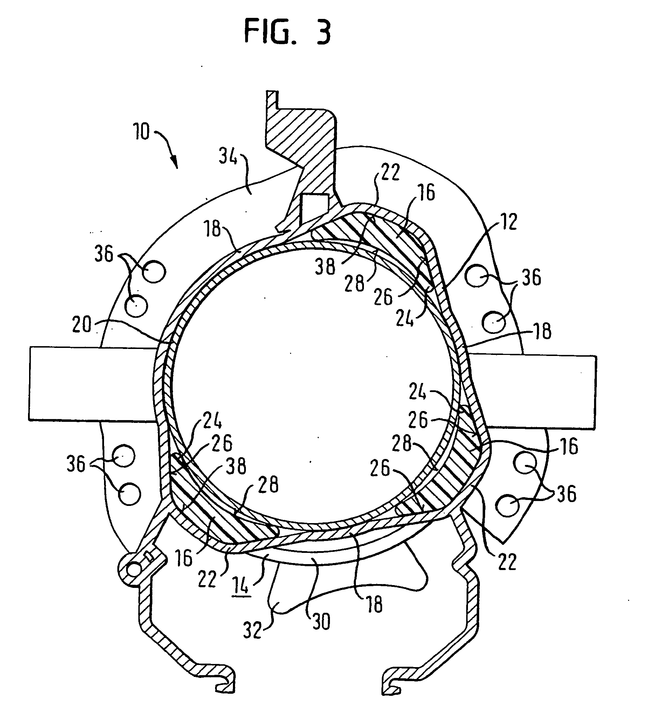

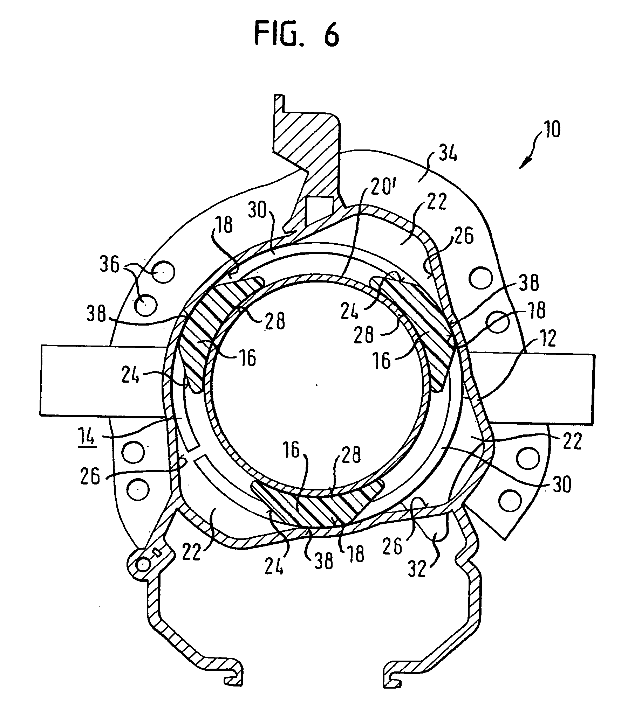

Die in den Figuren 1 bis 6 dargestellte Befestigungsvorrichtung 10 umfaßt eine Befestigungshülse 12 sowie ein Ausgleichsteil 14 mit Ausgleichsbacken 16, die drehbeweglich um eine Mittelachse der Befestigungshülse 12 aufgenommen sind.

Die Befestigungshülse 12 weist mehrere, bei der hier gezeigten Ausführungsform im Querschnitt kreissegmentförmige Aufnahmeabschnitte 18 auf, in die ein Mantelrohr 20 mit einem großen Außendurchmesser aufgenommen ist. Die Außenfläche des Mantelrohrs 20 liegt in den Aufnahmeabschnitten 18 fest und spielfrei an der Wandung der Befestigungshülse 12 an, so daß die Befestigungsvorrichtung 10 sicher am Mantelrohr 20 fixiert ist. Die Aufnahmeabschnitte 18 definieren demzufolge einen ersten Aufnahmequerschnitt, der dem Außendurchmesser des Mantelrohrs 20 entspricht.

Angrenzend an die im Querschnitt kreissegmentförmigen Aufnahmeabschnitte 18 der Befestigungshülse 12 sind Ausbuchtungen 22 gebildet, die radial vorstehen und sich längs der Befestigungshülse 12 erstrecken. Bei der in den Figuren 1 bis 3 gezeigten Position des Ausgleichsteils 14 liegen die Ausgleichsbacken 16 innerhalb der Ausbuchtungen 22. Die Form der Ausbuchtungen ist an die Form der Ausgleichsbacken angepaßt. Insbesondere sind die Ausgleichsbacken 22 mit abgeschrägten Seitenflächen 24 versehen, die an entsprechenden schrägen Seitenwänden 26 der Ausbuchtungen 22 anliegen. Die Ausgleichsbacken 16 weisen zudem eine dem Mantelrohr 20 zugewandte konkave Klemmfläche 28 auf, die bei der hier gezeigten Position des Ausgleichsteils 14 zumindest punktweise an dem Mantelrohr 20 anliegt. Dadurch wird die Klemmung des Mantelrohrs 20 im ersten Aufnahmequerschnitt der Befestigungshülse zusätzlich verstärkt.

Die Ausgleichbacken 16 sind zur Erhöhung der mechanischen Stabilität des Ausgleichsteils 14 und zur Verbesserung der Handhabbarkeit durch Stege 30 miteinander verbunden. An die Stege 30 sind ferner eine oder mehrere Betätigungslaschen 32 angeformt, um ein Verdrehen des Ausgleichsteils 14 bzw. der Ausgleichsbacken 16 in der Befestigungshülse 12 von Hand oder mittels eines speziellen Werkzeugs zu ermöglichen. Die Betätigungslaschen 32 sind vorzugsweise an einem fahrzeugseitigen Rand des Ausgleichsteils 14 angeordnet und grenzen an einen sich von der Befestigungshülse 12 radial erstreckenden, als Trägerplatte angeformten Befestigungsflansch 34 an. Am Befestigungsflansch 34 können bauteilseitig mehrere Befestigungspunkte 36 zur Verbindung mit dem weiteren Bauteil (hier nicht dargestellt) vorgesehen sein.

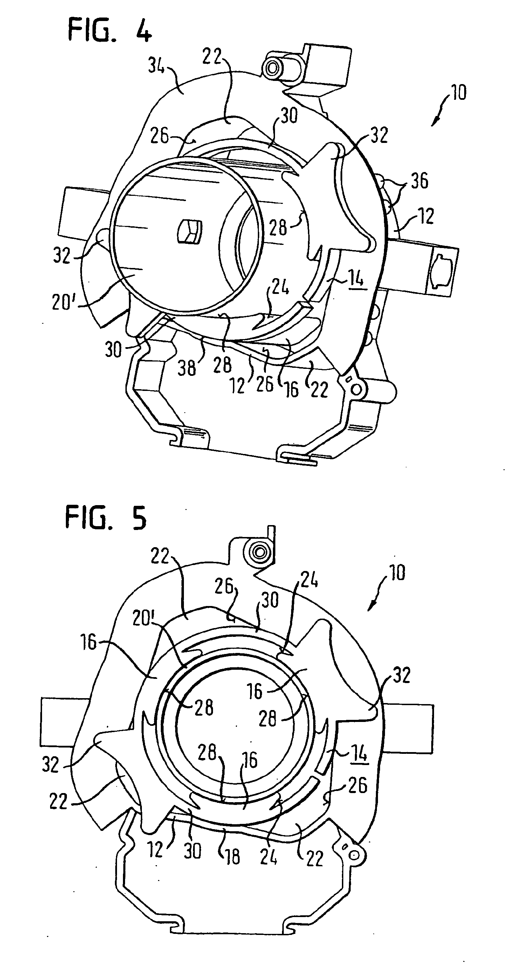

Die Figuren 4 bis 6 zeigen die erfindungsgemäße Befestigungsvorrichtung 10, in die ein Mantelrohr 20' mit kleinerem Außendurchmesser aufgenommen ist. Das Ausgleichsteil 14 mit den Ausgleichsbacken 16 ist hier aus der ersten Position in eine zweite Position herausgedreht, in der die Ausgleichsbacken 16 außerhalb der Ausbuchtungen 22 und damit zumindest teilweise in den Aufnahmeabschnitten 18 liegen. In dieser Position definieren die konkaven Klemmflächen 28 der Ausgleichsbacken 16 einen zweiten Aufnahmequerschnitt, der kleiner ist als der durch die Aufnahmeabschnitte 18 definierte erste Aufnahmequerschnitt und der dem Außendurchmesser des kleineren Mantelrohrs 20' entspricht. Das Mantelrohr 20' wird in der in den Figuren 4 bis 6 gezeigten Lage des Ausgleichsteils 14 somit von den Klemmflächen 28 der Ausgleichsbacken 16 in der Befestigungsvorrichtung 10 fest und spielfrei gehalten. Die den Klemmflächen 28 gegenüberliegenden konvex gekrümmten Deckflächen 38 der Ausgleichsbacken 16 liegen ihrerseits eng an den Aufnahmeabschnitten 18 der Befestigungshülse 12 an. Die Dicke der Ausgleichsbacken 16 entspricht somit der Radiusdifferenz der Mantelrohre 20 und 20'. Mit Hilfe der Ausgleichsbacken 16 des Ausgleichsteils 14 kann somit der durch die Aufnahmeabschnitte 18 definierte größere Aufnahmequerschnitt der Befestigungshülse 12 auf einen definierten, durch die Dicke der Ausgleichsbacken 16 einstellbaren kleineren Aufnahmequerschnitt reduziert werden.

Zur Verwendung der Befestigungsvorrichtung 10 wird zunächst das bevorzugt als Kunststoffspritzteil hergestellte Ausgleichsteil 14 mit den durch Stege 30 miteinander verbundenen Ausgleichsbacken 16 in die Befestigungshülse 12 eingesetzt. Die Ausgleichsbacken 16 liegen hierbei in den Ausbuchtungen 22 der Befestigungshülse 12 und erstrecken sich in axialer Richtung entlang der Innenwand der Befestigungshülse 12. Die Stege 30 verbinden die Ausgleichsbacken 16 bevorzugt am fahrzeugseitigen Ende der Ausgleichsbacken 16 und grenzen dort an einen Befestigungsflansch 34 der Befestigungshülse 12 an. Die Stege 30 und die Ausgleichsbacken 16 sind hierbei in Form eines Spaltrings ausgebildet, dessen Innendurchmesser, gemessen an der von den Klemmflächen 28 umhüllten Kreisfläche, geringfügig größer ist als der von den Aufnahmeabschnitten 18 definierte Aufnahmequerschnitt der Befestigungshülse 12. Das spaltringförmige Ausgleichsteil 14 muß daher zum Einsetzen der Ausgleichsbacken 16 in die Ausbuchtungen 22 leicht zusammengedrückt werden. Hierdurch wird eine Vorspannung erzeugt, welche die Ausgleichsbacken 14 sicher in den Ausbuchtungen 22 hält. Anschließend kann das Mantelrohr 20 mit dem größeren Außendurchmesser, der dem durch die Aufnahmeabschnitte 18 definierten Aufnahmequerschnitt entspricht, in die Befestigungshülse 12 eingesetzt werden.

Falls ein Mantelrohr 20' mit kleinerem Außendurchmesser verwendet werden soll, wird das Ausgleichsteil 14 aus der in den Figuren 1 bis 3 gezeigten ersten Position, in der die Ausgleichsbacken in den Ausbuchtungen 22 liegen, herausgedreht und in eine zweite Position gebracht, in der die Ausgleichsbacken wenigstens teilweise in den Aufnahmeabschnitten 18 angeordnet sind. Das Verdrehen des Ausgleichsteils 14 kann entweder von Hand oder mit einem angepaßten Werkzeug über die an den Stegen 30 bzw. den Ausgleichsbacken 16 angeordneten Betätigungslaschen 32 erfolgen. Das Ausgleichsteil 14 kommt dann in einer Position zu liegen, die in den Figuren 4 bis 6 dargestellt ist. Der Aufnahmequerschnitt der Befestigungsvorrichtung 10 wird dann durch die Klemmflächen 28 definiert und entspricht dem Außendurchmesser des kleineren Mantelrohrs 20'. Dieses wird damit spielfrei von den konkaven Klemmflächen 28 der Ausgleichsbacken 16 in der Befestigungshülse 12 gehalten. Es ist somit möglich, auf einfache Weise die Befestigungsvorrichtung 10 für Mantelrohre mit unterschiedlichem Außendurchmesser zu verwenden. Hierdurch werden die Anforderungen an die Lagerhaltung deutlich reduziert. Da das Ausgleichsteil 14 als Kunststoffspritzteil hergestellt werden kann, ist auch eine deutliche Senkung der Fertigungskosten möglich.

## Patentansprüche

1. Vorrichtung (10) zur Befestigung eines Bauteils an einem ersten Mantelrohr (20) oder einem zweiten Mantelrohr (20'), das einen kleineren Außendurchmesser als das erste Mantelrohr (20) aufweist, mit einer Befestigungshülse (12) und einem der Befestigungshülse (12) zugeordneten Ausgleichsteil (14),
wobei die Befestigungshülse (12) wenigstens einen Aufnahmeabschnitt (18) und an den Aufnahmeabschnitt (18) angrenzende Ausbuchtungen (22) aufweist und das Ausgleichsteil (14) drehbeweglich um eine Mittelachse der Befestigungshülse (12) angeordnete Ausgleichsbacken (16) aufweist, und wobei die Ausgleichsbacken (16) zwischen einer ersten Position und einer zweiten Position beweglich sind,
**dadurch gekennzeichnet, dass**
die Ausgleichsbacken (16) in der ersten Position in den Ausbuchtungen (22) aufgenommen sind und der Aufnahmeabschnitt (18) einen ersten Aufnahmequerschnitt zur Aufnahme des ersten Mantelrohrs (20) definiert, derart, daß die Außenfläche des ersten Mantelrohrs (20) fest und spielfrei am Aufnahmeabschnitt (18) anliegt,
und die Ausgleichsbacken (16) in der zweiten Position wenigstens teilweise im Aufnahmeabschnitt (18) liegen und einen zweiten Aufnahmequerschnitt für das zweite Mantelrohr (20') definieren, der dem Außendurchmesser des zweiten Mantelrohrs (20') entspricht.

2. Befestigungsvorrichtung (10) nach Anspruch 1, **dadurch gekennzeichnet, daß** das Ausgleichsteil (14) durch Stege (30) verbundene Ausgleichsbacken (16) umfaßt.

3. Befestigungsvorrichtung (10) nach Anspruch 2, **dadurch gekennzeichnet, daß** die Stege (30) aus Federstahl gebildet sind.

4. Befestigungsvorrichtung (10) nach Anspruch 2, **dadurch gekennzeichnet, daß** die Stege (30) und die Ausgleichsbacken (16) einstückig miteinander aus Kunststoff gebildet sind.

5. Befestigungsvorrichtung (10) nach einem der Ansprüche 1 bis 4, **dadurch gekennzeichnet, daß** das Ausgleichsteil (14) angeformte Laschen (32) aufweist.

6. Befestigungsvorrichtung (10) nach einem der Ansprüche 1 bis 5, **dadurch gekennzeichnet, daß** der Aufnahmeabschnitt (18) im Querschnitt kreissegmentförmig ist.

7. Befestigungsvorrichtung (10) nach einem der Ansprüche 1 bis 6, **dadurch gekennzeichnet, daß** die Form der Ausgleichsbacken (16) mit der Form der Ausbuchtungen (22) korrespondiert.

8. Befestigungsvorrichtung (10) nach einem der Ansprüche 1 bis 7, **dadurch gekennzeichnet, daß** Ausgleichsbacken (16) abgeschrägte Seitenflächen (26) und eine konkave, dem Mantelrohr (20; 20') zugewandte Klemmfläche (28) aufweisen.

9. Befestigungsvorrichtung (10) nach einem der Ansprüche 1 bis 8, **dadurch gekennzeichnet, daß** die Ausgleichsbacken (16) in der ersten Position vorgespannt in den Ausbuchtungen (22) gehalten sind.

10. Befestigungsvorrichtung (10) nach einem der Ansprüche 1 bis 9, **dadurch gekennzeichnet, daß** die Ausgleichsbacken (16) sich axial entlang eines Teiles der Befestigungshülse (12) erstrecken.

11. Befestigungsvorrichtung (10) nach einem der Ansprüche 1 bis 10, **dadurch gekennzeichnet, daß** die Befestigungshülse (12) einen Anschlag aufweist, der das Ausgleichsteil (14) in der ersten oder zweiten Position festlegt.

12. Befestigungsvorrichtung (10) nach einem der Ansprüche 1 bis 10, **dadurch gekennzeichnet, daß** die erste oder zweite Position durch eine Rastverbindung zwischen Ausgleichsteil (14) und Befestigungshülse (12) festgelegt ist.

13. Befestigungsvorrichtung (10) nach einem der Ansprüche 1 bis 12, **dadurch gekennzeichnet, daß** die Befestigungshülse (12) eine angeformte Trägerplatte (34) zur Befestigung des Bauteils aufweist.

14. Befestigungsvorrichtung (10) nach einem der Ansprüche 1 bis 13, **dadurch gekennzeichnet, daß** das Bauteil ein Lenkstockschalter ist.

## Claims

1. A device (10) for fastening a component to a first steering column jacket (20) or a second steering column jacket (20') which has a smaller outside diameter than the first steering column jacket (20), including a fastening sleeve (12) and an equalizing part (14) associated with the fastening sleeve (12),
the fastening sleeve (12) having at least one mounting section (18) and convexities (22) adjoining the mounting section (18) and the equalizing part (14) having equalizing jaws (16) arranged for rotary motion about a central axis of the fastening sleeve (12), and the equalizing jaws (16) being movable between a first position and a second position,
**characterized in that**
in the first position the equalizing jaws (16) are received in the convexities (22) and the mounting section (18) defines a first mounting cross-section to receive the first steering column jacket (20) such that the outer surface of the first steering column jacket (20) firmly rests against the mounting section (18) free of play,
and in the second position the equalizing jaws (16) lie at least partially in the mounting section (18) and define a second mounting cross-section for the second steering column jacket (20') which corresponds to the outside diameter of the second steering column jacket (20').

2. The fastening device (10) according to claim 1, **characterized in that** the equalizing part (14) comprises equalizing jaws (16) connected by cross-pieces (30).

3. The fastening device (10) according to claim 2, **characterized in that** the cross-pieces (30) are formed from spring steel.

4. The fastening device (10) according to claim 2, **characterized in that** the cross-pieces (30) and the equalizing jaws (16) are formed from plastic in one piece with each other.

5. The fastening device (10) according to any of claims 1 to 4, **characterized in that** the equalizing part (14) has integrally molded tongues (32).

6. The fastening device (10) according to any of claims 1 to 5, **characterized in that** the mounting section (18) has the shape of a circular segment in cross-section.

7. The fastening device (10) according to any of claims 1 to 6, **characterized in that** the shape of the equalizing jaws (16) corresponds to the shape of the convexities (22).

8. The fastening device (10) according to any of claims 1 to 7, **characterized in that** equalizing jaws (16) have chamfered side surfaces (26) and a concave clamping surface (28) facing the steering column jacket (20; 20').

9. The fastening device (10) according to any of claims 1 to 8, **characterized in that** in the first position the equalizing jaws (16) are held prestressed in the convexities (22).

10. The fastening device (10) according to any of claims 1 to 9, **characterized in that** the equalizing jaws (16) extend axially along a part of the fastening sleeve (12).

11. The fastening device (10) according to any of claims 1 to 10, **characterized in that** the fastening sleeve (12) has a stop which fixes the equalizing part (14) in the first or the second position.

12. The fastening device (10) according to any of claims 1 to 10, **characterized in that** the first or the second position is defined by a detent connection between the equalizing part (14) and the fastening sleeve (12).

13. The fastening device (10) according to any of claims 1 to 12, **characterized in that** the fastening sleeve (12) has an integrally molded carrier plate (34) for fastening the component.

14. The fastening device (10) according to any of claims 1 to 13, **characterized in that** the component is a steering column switch.

## Revendications

1. Dispositif (10) pour la fixation d'un composant à un premier tube enveloppe (20) ou un deuxième tube enveloppe (20') lequel présente un diamètre extérieur plus petit que le premier tube enveloppe (20), comportant une douille de fixation (12) et une pièce de compensation (14) associée à la douille de fixation (12),
la douille de fixation (12) présentant au moins un tronçon de réception (18) ainsi que des renflements (22) adjacents au tronçon de réception (18), et la pièce de compensation (14) présentant des joues de compensation (16) agencées rotatives autour d'un axe médian de la douille de fixation (12), et les joues de compensation (16) étant mobiles entre une première position et une deuxième position,
**caractérisé en ce que**
dans la première position, les joues de compensation (16) sont reçues dans les renflements (22) et le tronçon de réception (18) définit une première section transversale de réception pour la réception du premier tube enveloppe (20) de telle sorte que la surface extérieure du premier tube enveloppe (20) soit en appui contre le tronçon de réception (18) de manière solidaire et sans jeu,
et **en ce que** dans la deuxième position, les joues de compensation (16) se trouvent au moins partiellement dans le tronçon de réception (18) et définissent une deuxième section transversale de réception pour le deuxième tube enveloppe (20') correspondant au diamètre extérieur du deuxième tube enveloppe (20').

2. Dispositif de fixation (10) selon la revendication 1, **caractérisé en ce que** la pièce de compensation (14) comprend des joues de compensation (16) reliées par des barrettes (30).

3. Dispositif de fixation (10) selon la revendication 2, **caractérisé en ce que** les barrettes (30) sont réalisées en acier à ressorts.

4. Dispositif de fixation (10) selon la revendication 2, **caractérisé en ce que** les barrettes (30) et les joues de compensation (16) sont réalisées en matière plastique d'un seul tenant les unes avec les autres.

5. Dispositif de fixation (10) selon l'une des revendications 1 à 4, **caractérisé en ce que** la pièce de compensation (14) présente des pattes (32) moulées avec celle-ci.

6. Dispositif de fixation (10) selon l'une des revendications 1 à 5, **caractérisé en ce que** le tronçon de réception (18) présente une section transversale en forme de segment de cercle.

7. Dispositif de fixation (10) selon l'une des revendications 1 à 6, **caractérisé en ce que** la forme des joues de compensation (16) correspond à la forme des renflements (22).

8. Dispositif de fixation (10) selon l'une des revendications 1 à 7, **caractérisé en ce que** les joues de compensation (16) présentent des surfaces latérales (26) biseautées et une surface de serrage (28) concave faisant face au tube enveloppe (20 ; 20').

9. Dispositif de fixation (10) selon l'une des revendications 1 à 8, **caractérisé en ce que** dans la première position, les joues de compensation (16) sont retenues précontraintes dans les renflements (22).

10. Dispositif de fixation (10) selon l'une des revendications 1 à 9, **caractérisé en ce que** les joues de compensation (16) s'étendent axialement le long d'une partie de la douille de fixation (12).

11. Dispositif de fixation (10) selon l'une des revendications 1 à 10, **caractérisé en ce que** la douille de fixation (12) présente une butée immobilisant la pièce de compensation (14) dans la première ou la deuxième position.

12. Dispositif de fixation (10) selon l'une des revendications 1 à 10, **caractérisé en ce que** la première ou la deuxième position est déterminée par une liaison par enclenchement entre la pièce de compensation (14) et la douille de fixation (12).

13. Dispositif de fixation (10) selon l'une des revendications 1 à 12, **caractérisé en ce que** la douille de fixation (12) présente une plaque support (34) moulée avec celle-ci pour fixer le composant.

14. Dispositif de fixation (10) selon l'une des revendications 1 à 13, **caractérisé en ce que** le composant est un commutateur de colonne de direction.
